# EUROPEAN PATENT SPECIFICATION

(11) **EP 2 856 739 B1**
(45) Date of publication and mention of the grant of the patent: **26.04.2023**
(21) Application number: 13726714.2
(22) Date of filing: 24.05.2013
(51) Int. Cl.: H04N 21/2343, H04N 21/258, H04N 21/845

(54) **METHOD OF FEEDING A REPLACEMENT CLIP INTO THE ONGOING TRANSMISSION OF A VIDEO CLIP**
VERFAHREN ZUM EINFÜGEN EINES ERSATZCLIPS IN DIE LAUFENDE ÜBERTRAGUNG EINES VIDEOCLIPS
PROCÉDÉ D'INSERTION D'UN EXTRAIT DE REMPLACEMENT LORS D'UNE TRANSMISSION EN COURS D'UN EXTRAIT VIDÉO

(30) Priority: 24.05.2012 DE 102012104481
(43) Date of publication of application: 08.04.2015
(73) Proprietor: Deutsche Telekom AG, 53113 Bonn (DE); Alcatel Lucent, 91620 Nozay (FR)
(72) Inventor: EMSER, Heiko, 44263 Dortmund (DE); SCHOEN, Sebastian, 70439 Stuttgart-Stammheim (DE)
(74) Representative: Braun-Dullaeus Pannen Emmerling Patent- & Rechtsanwaltspartnerschaft mbB
(86) International application number: PCT/EP2013/060783
(87) International publication number: WO 2013/174996

(56) References cited:
- EP-A2- 1 148 489
- WO-A1-2011/041916
- US-A1- 2005 278 259
- US-A1- 2007 118 872
- US-A1- 2008 034 393
- US-A1- 2010 122 303
- VIJAY KUMAR ADHIKARI ET AL: "Unreeling netflix: Understanding and improving multi-CDN movie delivery", INFOCOM, 2012 PROCEEDINGS IEEE, IEEE, 25 March 2012 (2012-03-25), pages 1620-1628, XP032178892, DOI: 10.1109/INFCOM.2012.6195531 ISBN: 978-1-4673-0773-4
- WEI PU ET AL: "Video adaptation proxy for wireless Dynamic Adaptive Streaming over HTTP", PACKET VIDEO WORKSHOP (PV), 2012 19TH INTERNATIONAL, IEEE, 10 May 2012 (2012-05-10), pages 65-70, XP032197403, DOI: 10.1109/PV.2012.6229745 ISBN: 978-1-4673-0299-9
- A. MASSOUDI ET AL: "Overview on Selective Encryption of Image and Video: Challenges and Perspectives", EURASIP JOURNAL ON INFORMATION SECURITY, vol. 2008, 28 December 2008 (2008-12-28), pages 1-18, XP055373883, US ISSN: 1687-4161, DOI: 10.1155/2008/179290

## Description

The invention refers to a method of feeding a replacement clip into the ongoing transmission of a video clip

Such a method is necessary if broadcast of a video clip, which is continuing to run per se, to the terminal of a user is no longer permitted, because for example the service provider does not have the necessary rights to transmit the video clip over a given transmission path, in particular mobile internet. It may for example occur during football transmissions that, while the pre-match reporting and interviews with football pundits are allowed to be transmitted over mobile internet, once the starting whistle is blown the user is only shown a truly meaningless replacement clip, which consists of a text message or a black screen. At most the user might be able to hear the sound; the picture, however, is denied him.

This method expressly does not mean a method in which a video clip is stopped, an advertising clip is shown in this pause and then the video clip is continued. Instead, the intention is to bridge the period of the ongoing live transmission with the replacement clip, until the transmission is again one for which there are transmission rights for the transmission path, a fact which may be predetermined or signalled by the broadcasting station broadcasting the video clip.

US 2011/0145854 A1 discloses a method of inserting advertising content into a film to be transmitted digitally to a user. Here both the film and the advertising content are transmitted in a data stream to a user unit at the user's location over a data communication line. By way of insert information transmitted on a separate transmission channel, the film is stopped by the user unit if required and in exchange an advertising spot is injected.

The film is thus always transmitted in its entirety to the user unit, output thereof merely being briefly interrupted but not replaced. The method is not suitable for replacing film sequences for which no broadcasting rights are locally or temporarily available, since the film sequences are transmitted to the user unit anyway and so locally escape the reach of the service provider. A particular disadvantage here is that the film sequences could possibly be stored locally on the user's user unit without authorisation. Furthermore, this method also relates to a method in which the transmitted film is stopped for a moment while the advertisement is fed in, in order to provide time for the advertisement, i.e. it is merely interrupted and not replaced.

In this context US 2010/0122303 A1 discloses computer-implemented methods for delivery of video content across a network. Such methods comprise a content delivery manager capable of receiving a video stream from a content source for delivery to a end user of a content publisher. The content delivery manager is further capable of detecting a trigger signal within the video stream. For example, the trigger signal can indicate a temporal mark injected into the video stream by the content publisher. During general operation, the content delivery manager processes the trigger signal to determine whether to modify delivery of the video stream to the end user.

It is therefore the object of the present invention to provide a method for feeding the replacement clip into the ongoing transmission of a video clip, which method is technically robust and the possibility of unauthorised access to the video clip is largely prevented.

The object underlying the invention is achieved by a method according to claim 1. Preferred refinements are revealed by the subclaims.

The nub of the invention is in particular that the decision may be made within the data fragmenter as to which of the clips, i.e. either the video clip or the replacement clip, is fragmented and thus provided for transmission to the end user. In this case, both clips are available to the data fragmenter, whereby the data fragmenter is thus competent to choose which clip it should fragment and thus prepare for broadcasting to the user over a given transmission path and which it should not.

After the interrupt mode, the first video signal is again fragmented, the first video signal not being stopped during interrupt mode. This therefore means that the video clip runs substantially entirely normally during the period of the interruption, but simply cannot be transmitted to the terminal during the interruption. In contrast, the method should not be confused with those in which the video clip is stopped and in this stoppage phase advertisements are then fed in, with the clip then continuing from where the advertisements started once said advertisements have finished. The present method is therefore suitable in particular for live transmissions for example of sports contests or cultural events, which are associated with particular rights.

The decision is taken within the data fragmenter whether the first video signal or the second video signal is fragmented. The fragmented signal, which may thus contain the first video signal or the second video signal, is then transmitted to a user terminal via a data link. To this end, a decision unit may be provided within the data fragmenter, which decision unit may decide on the basis of rights information to switch the data fragmenter over to interrupt mode.

According to the invention, provision is made for the audio signal associated with the video clip to continue to be transmitted even in interrupt mode to the terminal, where the user may listen to it. Only the video signal is then replaced. Thus, for example, the user may then listen to the audio transmission of the football match but not however watch said football match. However, the audio signal is then preferably fragmented together with the replacement clip, thereby markedly reducing synchronisation errors.

The fragmented video signal is preferably encrypted by the data fragmenter with a first key. This first key is in turn encrypted with a user-specific second key and then made available to the user. For creation or provision of the first or second key, communications may take place between the user terminal and the data fragmenter.

The method is particularly applicable to adaptive streaming. In this case, the video signal may be coded in various video bandwidths and thus different quality levels and be available as a video stream. The fragmentation unit then divides this video stream into video packets (fragments), with each video packet having one bandwidth associated with it. These video packets are encrypted as required and for example kept ready for retrieval on web servers (storage units) via URLs. The fragmenter further creates an index file, which is also saved on the web server and keeps the URLs of the individual fragments ready. For retrieval, the user firstly loads the index file, in order to find the URLs of the individual fragments with the respective bandwidths. Downloading of the first fragment then proceeds by way of the identified URL. During this downloading, it is possible to identify which bandwidth is actually available to the user. Should there be differences from the original bandwidth, a fragment corresponding to a different bandwidth can be downloaded next.

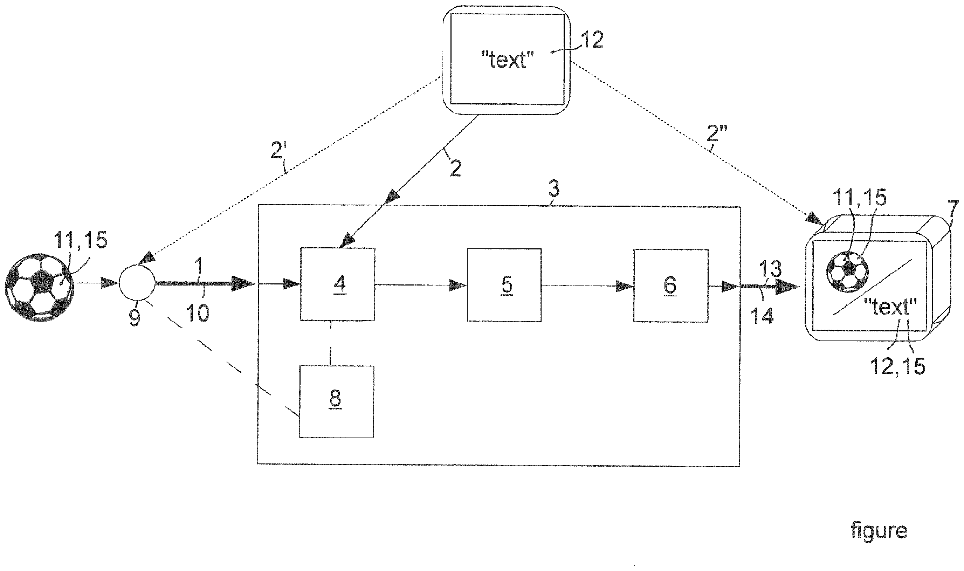

The invention is explained in greater detail by means of the figure. A block diagram shows an arrangement for carrying out the method according to the invention. The right-hand side of the diagram shows a user terminal 7, for example a mobilephone or other terminal with mobile internet access, which can receive a fragmented video signal 13 by means of a decoder, which is not shown or is integrated in the terminal. The fragmented video signal 13 contains image information about a video clip 11, which is shown on the left-hand side by way of example as a football. This video clip may for example thus be a football transmission. A corresponding audio signal 15 is also associated with this video clip 11. In normal mode, the video clip with the football match is output together with the associated audio signal 15 by the mobile telephone 7. The user terminal is also understood to be a combination of an output device with a decoder unit which is separate but arranged locally at the user's location.

In normal operation the video signal 11 is provided by a broadcasting station (broadcaster) 9. This broadcasting station 9 makes the film available for example in a live stream to different service providers (distributors) via a first data line 10. In this case, the first video signal 1 comprising the video clip 11 is provided by the broadcasting station 9. Via the first data line 10, the first video signal arrives at a data fragmenter 3, which is for example associated with the service provider or another distributor with which an end user has a contract for delivery of mobile entertainment services. Said data fragmenter 3 contains a fragmenting unit 4, which splits the first data signal 1 into transmissible data packets. An encryption unit 5 may for example be provided downstream of the fragmenting unit 4. The encryption unit 5 provides the video signal fragments with encryption. In so doing, the encryption unit 5 makes use of a first key. So that the user can decrypt the video signal, the key needed for decoding is in turn sent in encrypted form to the user. A second, user-specific key is used to encrypt the key for decoding purposes. In a following storage unit 6, the video signal fragments 13 are buffered at least for a short time and held ready for reception.

The fragmented video signal 13 is then transmitted to the user terminal 7 over a second data line 14. There the fragmented video signal 13 can be decoded and enjoyed by the user as a video clip 11 together with the audio signal 15.

Video clips are, however, often also associated with certain transmission rights. For instance, the transmission of major football matches is associated with the highly complex management of transmission rights, which are sometimes very expensive to purchase. It may thus be the case, for example, that a service provider is only entitled to broadcast certain content over a given transmission path. A service provider who is entitled, for example, to transmit a football match live over the cable TV network does not necessarily at the same time also have the rights to transmit the football match to an end user via mobile internet.

According to the invention, the first video signal is then replaced in the data fragmenter 3 by a second video signal 2, which is here indicated for example as a text signal. This second video signal thus constitutes a replacement clip, which is displayed instead of the video signal 11 associated with the football match. The fragmenting unit 4 then processes the second video signal with the replacement clip together with the audio signal 15 from the football match and with the encryption unit 5 to yield the fragmented video signal 13, which is ther shown on the user's terminal 7 as a replacement clip 12 together with the audio signal 15 from the football match.

Thus, according to the invention both the first video signal 1 with the football match 11 and the second video signal 2 with the replacement clip 12 are made available to the data fragmenter 3. The data fragmenter 3 decides independently which of the two video signals should then be processed for subsequent transmission to the user or the user terminal 7. To this end, a decision unit 8 is provided in the data fragmenter 3, which has access to rights information, in particular to transmission path-specific rights, which are thus associated with the respective transmission path. For instance, the decision unit 8 knows that the service provider does not have the necessary rights to broadcast the football match 11 via mobile internet. The decision unit 8 therefore then outputs a command to the fragmenting unit 4 to fragment the second video signal 12 instead of the first video signal 11. The dashed lines to the decision unit 8 here represent control commands or information channels between the individual units. The link between the decision unit 8 and the broadcasting station 9 is intended to illustrate the fact that the decision unit 8 knows about the transmission path-specific rights associated with the respective video clip and based on an agreement between the service provider and the broadcasting station 9.

Reference numerals 2' and 2" identify two dashed lines which relate to non-claimed variants of the method just described. Reference numeral 2' is used synonymously to illustrate that the second video signal 2 is not sent from the source, which provides the replacement clip 12, to the data fragmenter 3, but rather to the data source 9, where it is exchanged for the first video signal 11. The disadvantage of this is that the data fragmenter 3 does not have any influence on what reaches the user 7. The data fragmenter 3 can only process what is made available to it by the video source 9. A decision unit 8 within the data fragmenter 3 could then at most simply decide not to put through the video signal. Individual feed-in of a replacement clip is not then left to the discretion of the data fragmenter 3.

### List of reference signs

- 1: First video signal
- 2: Second video signal
- 3: Data fragmenter
- 4: Fragmenting unit
- 5: Encryption unit
- 6: Storage unit
- 7: User terminal
- 8: Decision unit
- 9: Video source
- 10: First data link
- 11: Video clip
- 12: Replacement clip
- 13: Fragmented video signal
- 14: Second data link
- 15: Audio signal of the video clip

## Claims

1. A method of feeding a replacement clip (12) into the ongoing transmission of a video clip (11) of a football match,
a first compressed video signal (1) comprising the video clip (11) being transmitted from a video source (9) to a data fragmenter (3), the data fragmenter (3) splitting the first video signal (1) into individual data fragments and then outputting a fragmented video signal (13) to a user terminal (7),
the fragmented video signal (13) being transmitted over a data link (14) to a user terminal (7), at which the fragmented video signal (13) is decoded and the video clip (11) may be viewed by a user,
wherein the data fragmenter (3) comprises a decision unit (8), which decides on the basis of rights information to switch the data fragmenter (3) into an interrupt mode,
wherein the data fragmenter (3) decides independently which of the two video signals (1, 13) should then be processed for subsequent transmission to the user terminal (7),
wherein during the interrupt mode:
- a second video signal (2) comprising the replacement clip (12) is provided for fragmentation to the data fragmenter (3) in parallel with and at the same time as the first video signal (1),
- the replacement clip (12) is being transmitted to the user terminal (7) for displaying in interrupt mode,
- the video clip (11) is continuing to run, namely is made available by the video source (9) to the fragmenter (3), during interrupt mode, but not being visible for the user, wherein the second video signal (2) is fragmented instead of the first video signal (1),
- wherein a corresponding audio signal (15) is associated with this video clip (11), wherein the fragmenting unit (4) then processes the second video signal with the replacement clip together with the audio signal (15) from a football match with the encryption unit (5) to yield the fragmented video signal (13), which is then shown on the user's terminal (7) as a replacement clip (12) together with the audio signal 15 from the football match, wherein the second video signal (2) is indicated as a text signal.

2. A method according to the preceding claim,
**characterised**
**in that** after interrupt mode the first video signal (1) is fragmented again, the first video signal (1) not being stopped during interrupt mode.

3. A method according to one of the preceding claims,
**characterised**
**in that** it is decided by the data fragmenter (3) whether the first video signal (1) or the second video signal (2) is fragmented and transmitted over the second data link (14) to a user terminal.

## Patentansprüche

1. Verfahren zum Einspeisen eines Austauschclips (12) in die laufende Übertragung eines Videoclips (11) eines Fußballspiels,
wobei ein erstes komprimiertes Videosignal (1), das den Videoclip (11) umfasst, von einer Videoquelle (9) an einen Datenfragmentierer (3) übertragen wird, wobei der Datenfragmentierer (3) das erste Videosignal (1) in einzelne Datenfragmente aufteilt und dann ein fragmentiertes Videosignal (13) an ein Benutzerendgerät (7) ausgibt,
wobei das fragmentierte Videosignal (13) über eine Datenverbindungsstrecke (14) an ein Benutzerendgerät (7) übertragen wird, an welchem das fragmentierte Videosignal (13) decodiert wird und der Videoclip (11) von einem Benutzer betrachtet werden kann,
wobei der Datenfragmentierer (3) eine Entscheidungseinheit (8) aufweist, die auf der Grundlage von Berechtigungsinformationen entscheidet, ob der Datenfragmentierer (3) in einen Unterbrechungsmodus umgeschaltet wird,
wobei der Datenfragmentierer (3) unabhängig entscheidet, welches der beiden Videosignale (1, 13) dann zur weiteren Übertragung an das Benutzerendgerät (7) übertragen werden soll,
wobei während des Unterbrechungsmodus:
- ein zweites Videosignal (2), das den Austauschclip (12) umfasst, parallel zu und zur selben Zeit wie das erste Videosignal (1) dem Datenfragmentierter (3) zur Fragmentierung bereitgestellt wird,
- der Austauschclip (12) an das Benutzerendgerät (7) zum Anzeigen im Unterbrechungsmodus übertragen wird,
- der Videoclip (11) während des Unterbrechungsmodus weiterhin läuft, das heißt, für den Fragmentierer (3) von der Videoquelle (9) verfügbar gemacht wird, jedoch für den Benutzer nicht sichtbar ist, wobei das zweite Videosignal (2) anstelle des ersten Videosignals (1) fragmentiert wird,
- wobei ein entsprechendes Audiosignal (15) mit diesem Videoclip (11) assoziiert ist, wobei die Fragmentierungseinheit (4) dann das zweite Videosignal mit dem Austauschclip zusammen mit dem Audiosignal (15) von einem Fußballspiel mit der Verschlüsselungseinheit (5) verarbeitet, um das fragmentierte Videosignal (13) zu liefern, welches sodann auf dem Endgerät (7) des Benutzers als Austauschclip (12) zusammen mit dem Audiosignal (15) von dem Fußballspiel angezeigt wird, wobei das zweite Videosignal (2) als Textsignal angezeigt wird.

2. Verfahren nach dem vorhergehenden Anspruch,
**dadurch gekennzeichnet,**
**dass** nach dem Unterbrechungsmodus wieder das erste Videosignal (1) fragmentiert wird, wobei das erste Videosignal (1) während des Unterbrechungsmodus nicht gestoppt wird.

3. Verfahren nach einem der vorhergehenden Ansprüche,
**dadurch gekennzeichnet,**
**dass** von dem Datenfragmentierer (3) entschieden wird, ob das erste Videosignal (1) oder das zweite Videosignal (2) fragmentiert und über die zweite Datenverbindungsstrecke (14) an ein Benutzerendgerät übertragen wird.

## Revendications

1. Procédé d'introduction d'un clip de remplacement (12) dans la transmission en cours d'un clip vidéo (11) d'un match de football, un premier signal vidéo compressé (1) comprenant le clip vidéo (11) étant transmis à partir d'une source vidéo (9) à un fragmenteur de données (3), le fragmenteur de données (3) divisant le premier signal vidéo (1) en fragments de données individuels puis délivrant un signal vidéo fragmenté (13) à un terminal d'utilisateur (7), le signal vidéo fragmenté (13) étant transmis sur une liaison de données (14) à un terminal d'utilisateur (7), au niveau duquel le signal vidéo fragmenté (13) est décodé et le clip vidéo (11) peut être visualisé par un utilisateur, dans lequel le fragmenteur de données (3) comprend une unité de décision (8), qui décide sur la base d'informations de droits de commuter le fragmenteur de données (3) dans un mode d'interruption, dans lequel le fragmenteur de données (3) décide indépendamment lequel des deux signaux vidéo (1, 13) doit être ensuite traité pour une transmission ultérieure au terminal d'utilisateur (7), dans lequel, pendant le mode d'interruption :
- un deuxième signal vidéo (2) comprenant le clip de remplacement (12) est fourni pour fragmentation au fragmenteur de données (3) en parallèle avec et en même temps que le premier signal vidéo (1),
- le clip de remplacement (12) est transmis au terminal d'utilisateur (7) pour afficher en mode d'interruption,
- le clip vidéo (11) continue de tourner, c'est-à-dire est rendu disponible par la source vidéo (9) au fragmenteur (3), pendant le mode d'interruption, mais n'étant pas visible pendant l'utilisateur, dans lequel le deuxième signal vidéo (2) est fragmenté à la place du premier signal vidéo (1),
- dans lequel un signal audio correspondant (15) est associé à ce clip vidéo (11), dans lequel l'unité de fragmentation (4) traite alors le deuxième signal vidéo avec le clip de remplacement ainsi que le signal audio (15) d'un match de football avec l'unité de cryptage (5) pour produire le signal vidéo fragmenté (13), qui est ensuite affiché sur le terminal de l'utilisateur (7) sous la forme d'un clip de remplacement (12) avec le signal audio (15) provenant du match de football, dans lequel le deuxième signal vidéo (2) est indiqué comme un signal de texte.

2. Procédé selon la revendication précédente, **caractérisé en ce qu'**après le mode d'interruption le premier signal vidéo (1) est à nouveau fragmenté, le premier signal vidéo (1) n'étant pas arrêté pendant le mode d'interruption.

3. Procédé selon l'une des revendications précédentes, **caractérisé en ce qu'**il est décidé par le fragmenteur de données (3) si le premier signal vidéo (1) ou le deuxième signal vidéo (2) est fragmenté et transmis sur la deuxième liaison de données (14) à un terminal d'utilisateur.
